# EUROPÄISCHE PATENTSCHRIFT

(11) **EP 2 112 737 B1**
(45) Veröffentlichungstag und Bekanntmachung des Hinweises auf die Patenterteilung: **13.05.2020**
(21) Anmeldenummer: 09154402.3
(22) Anmeldetag: 05.03.2009
(51) Int. Cl.: H02H 7/125, H02M 1/32, H02H 7/127, H02M 7/162, H02H 9/04

(54) **Schaltung zum Schutz zumindest eines Gleichstromnetzes mit Gleichstromverbrauchern gegen Überspannung**
Circuit for protecting at least one direct current network with direct current loads against overvoltage
Circuit destiné à la protection d'au moins un réseau à courant continu à l'aide de charges à courant continu contre la surtension

(30) Priorität: 21.04.2008 DE 102008020030
(43) Veröffentlichungstag der Anmeldung: 28.10.2009
(73) Patentinhaber: AEG Power Solutions GmbH, 59581 Warstein-Belecke (DE)
(72) Erfinder: Barnhusen, Hartmut, 59494, Soest Müllingsen (DE); Maiberg, Paul, 59609, Anröchte (DE)
(74) Vertreter: Basfeld, Rainer

(56) Entgegenhaltungen:
- DE-A1- 2 549 019
- DE-A1- 3 504 594

## Beschreibung

Die vorliegende Erfindung betrifft eine Schaltungsanordnung mit einem Gleichrichter und einer Schaltung zum Schutz zumindest eines Gleichstromnetzes mit Gleichstromlasten, die geeignet und eingerichtet sind über den Gleichrichter mit elektrischer Energie versorgt zu werden.

Gleichstromnetze mit Gleichstromlasten, die über Gleichrichter, zum Beispiel Drei-Phasen-Gleichrichter, mit Gleichstrom versorgt werden, sind beispielsweise aus Eigennetzen von Kraftwerken bekannt. In diesen Gleichstromeigennetzen der Kraftwerke können als Gleichstromlasten beliebige, für die Sicherheit des Kraftwerks relevante Gleichstromlasten vorgesehen sein. Es kann sich dabei beispielsweise um Sensoren, Feldgeräte, Anzeigegeräte, Anzeigemittel, Steuerungen und Regelungen, insbesondere für eine unterbrechungsfreie Stromversorgung, eine Sicherheitsstromversorgung, insbesondere eine Sicherheitsbeleuchtung, Antriebe, insbesondere Ventilantriebe an einem Reaktorbehälter, und andere Gleichstromlasten handeln. Diese elektrischen Geräte sind als Gleichstromgeräte konzipiert, da sie so mit einfachen Mitteln aus einem Energiespeicher wie einem Akkumulator oder einer Batterie mit elektrischer Energie versorgt werden können. Im Normalfall, das heißt im störungsfreien Betrieb sollen diese Geräte beziehungsweise Gleichstromlasten mit von dem Kraftwerk erzeugter elektrischer Energie versorgt werden. Daher ist das Gleichstromnetz mit diesen Gleichstromlasten über einen Gleichrichter mit einer vom Kraftwerk erzeugten Wechselspannung verbunden.

Es hat sich jedoch in der Vergangenheit gezeigt, dass diese Gleichstromnetze nur unzureichend gegen Überspannung aus dem Wechselstromnetz abgesichert sind. Diese Überspannungen können zum Teil zur Beschädigung der Gleichstromlasten führen. Insbesondere kann es zu einem Ausfall von Steuerungen und Regelungen sowie Sensoren und Aktoren kommen.

Eine Schaltungsanordnung mit den Merkmalen des Oberbegriffs des Anspruchs 1 ist in der Fig. 4 des Dokumentes DE 35 04 594 A1 offenbart. Diese bekannte Schaltungsanordnung hat einige Nachteile. Der wesentliche Nachteil ist es, dass die Schaltungsanordnung eine einphasige Energieversorgung hat. In Kraftwerken sind Gleichstromeigennetze oft über einen Dreiphase-Gleichrichter an die Generatoren des Kraftwerkes angebunden. Die aus der Fig. 4 des Dokumentes DE 35 04 594 bekannte Schaltungsanordnung ist daher nicht zur Verwendung in allen Kraftwerken bekannt.

Hier setzt die vorliegende Erfindung an.

Der vorliegenden Erfindung liegt das technische Problem zugrunde eine Schaltung vorzuschlagen, die geeignet und eingerichtet ist, ein Gleichstromnetz mit Gleichstromlasten, das über einen Gleichrichter mit Dreiphasen-Wechselspannung aus einem Dreiphasen-Wechselspannungsnetz versorgt wird, gegen Überspannungen aus eben diesen Wechselstromnetz zu schützen.

Eine Lösung für dieses technische Problem ist in Anspruch 1 angegeben. Eine erfindungsgemäße Schaltung weist demnach ein Mittel zur Erkennung einer Überspannung auf, das geeignet und eingerichtet ist, eine Überspannung am Eingang des Gleichstromnetzes beziehungsweise am Ausgang des Gleichrichters zu erkennen. Die Schaltung umfasst ferner ein Mittel zum Übernehmen eines Stroms von einem oder mehreren stromführenden Thyristoren einer ersten Gruppe Thyristoren des Gleichrichters, sobald das Mittel zur Erkennung der Überspannung eine Überspannung erkannt hat, wobei die Übernahme des Stroms zu einem Zwangslöschen des Thyristors bzw. der Thyristoren der ersten Gruppe führt. Eine erfindungsgemäße Schaltung weist Mittel zum Entladen von Drosseln des Gleichrichters auf. Die Mittel zum Entladen können durch zweite steuerbare Schaltelemente, vorzugsweise ebenfalls Thyristoren, gebildet werden, die in einem Zweig parallel zu den Drosseln angeordnet sind.

Gemäß der Erfindung übernimmt das Mittel zum Übernehmen im Falle einer Überspannung, insbesondere im Falle einer transienten Überspannung den Strom von zumindest einem stromführenden Thyristor der ersten Gruppe von Thyristoren. Hat das Mittel zum Übernehmen den Strom übernommen, hat also eine Kommutierung stattgefunden, ist der Strom durch den bzw. die bislang stromführenden dem Thyristoren der ersten Gruppe von Thyristoren des Gleichrichters gleich null, weshalb der Thyristor zwangsweise erlischt.

Das Mittel zum Übernehmen kann ein erstes steuerbares Schaltelement zum Schalten eines Stromkreises über einen stromführenden Thyristor oder mehrere stromführenden Thyristoren einer zweiten Gruppe von Thyristoren des Gleichrichtersaufweisen, der im durchgeschalteten Zustand des steuerbaren Schaltelements geschlossen ist.

Das erste steuerbare Schaltelement kann ein erster Thyristor sein.

Das Mittel zum Übernehmen kann einen Energiespeicher als Spannungsquelle aufweisen, der einen Strom durch den vom ersten steuerbaren Schaltelement geschlossenen Stromkreis treibt. Bei dem Energiespeicher kann es sich um einen Kondensator handeln, der im laufenden Betrieb aufgeladen wird. Dazu kann ein Auflademittel vorgesehen sein. Der Kondensator wird bei von dem ersten gesteuerten Schaltelement geschlossenem Stromkreis entladen.

In Reihe zum dem ersten gesteuerten Schaltelement und dem Kondensator ist vorteilhaft eine Drossel angeordnet, die nach einer Entladung des Kondensators ein Umschwingen bewirkt und dadurch ein Zwangslöschen des ersten gesteuerten Schaltelements bewirkt.

Außerdem dienen sowohl der Kondensator als auch die Drossel zur Strombegrenzung des durch die Überspannung durch den vom ersten gesteuerten Schaltelement geschlossenen Stromkreis.

Das Mittel zum Übernehmen kann eine Steuerung aufweisen, die geeignet und eingerichtet ist, im Falle einer Überspannung das erste steuerbare Schaltelement zum Schließen anzusteuern. Die Steuerung kann außerdem einen Zündimpulserzeuger umfassen, mit welchem ein Zündimpuls für den ersten Thyristor erzeugt werden kann.

Die zweiten Thyristoren können in Sperrrichtung zum Laststrom angeordnet sein. Die zweiten steuerbaren Schaltelemente können geeignet eingerichtet sein, im Falle einer Überspannung von der Steuerung des Mittels zum Übernehmen zum Zweck des Schließens angesteuert zu werden. Die zweiten Thyristoren können vom Zündimpulserzeuger der Steuerung im Falle einer Überspannung einen Zündimpuls erhalten, wodurch der Stromkreis über die Thyristoren geschlossen wird.

Der Kondensator, der während des laufenden Betriebs aufgeladen wird, damit er im Falle einer Überspannung den aufzuprägenden Strom treibt, kann mit einem ersten Anschluss mit dem negativen Pol des Gleichrichters verbunden sein. Ein zweiter Anschluss des Kondensators ist vorteilhaft zumindest mittelbar mit der Anode des ersten Thyristors verbunden.

Der erste Thyristor kann geeignet und eingerichtet sein mit seiner Anode über je eine Diode mit einer der Eingangsphasen verbunden zu sein. Zwischen dem Kondensator und dem ersten Thyristor kann eine Drossel angeordnet sein.

Eine derartige Schaltung kann zusammen mit einem Gleichrichter und einem Gleichstromnetz zu einer Schaltungsanordnung verschaltet sein, wobei das Gleichstromnetz Gleichstromlasten umfasst, die über den Gleichrichter mit elektrischer Energie versorgt werden.

Das Gleichstromnetz kann ein Netz innerhalb eines Kraftwerks sein. Bei dem Netz kann es sich um das Eigenstromnetz eines Kraftwerks handeln. Aus dem Netz können Sensoren, Feldgeräte, Anzeigegeräte, Anzeigemittel, Steuerungen und Regler, insbesondere für eine unterbrechungsfreie Stromversorgung, eine Sicherheitsstromversorgung, insbesondere eine Sicherheitsbeleuchtung, Antriebe, insbesondere Ventilantriebe in einem Reaktorbehälter, und andere für die Sicherheit des Kraftwerks relevante Gleichstromlasten versorgt werden. Eine erfindungsgemäße Schaltung kann in einem Kraftwerk zum Schutz von für die Sicherheit des Kraftwerks relevanten Gleichstromlasten in einem Eigenstromnetz, das an einem Gleichrichter angeschlossen ist, verwendet werden.

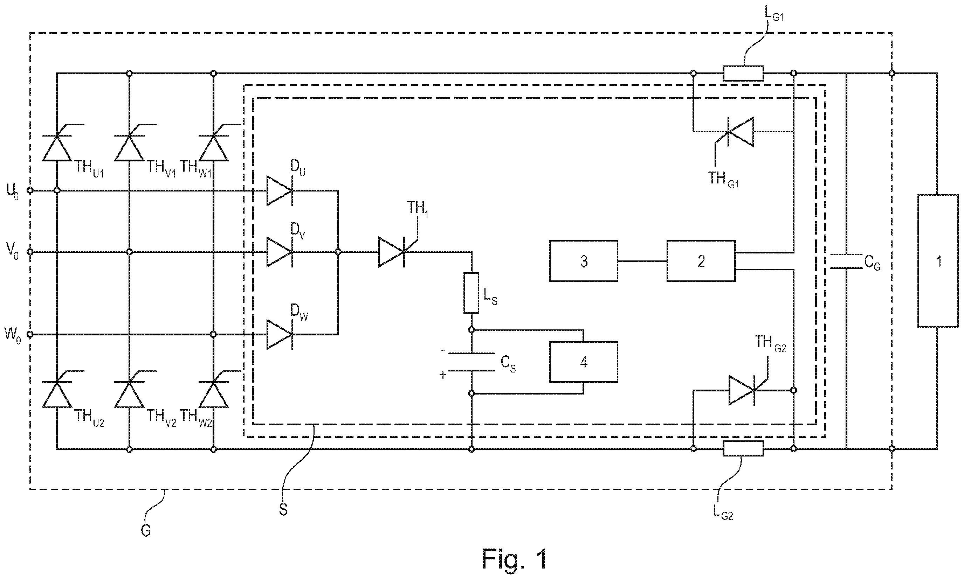

Weitere Merkmale und Vorteile der vorliegenden Erfindung werden deutlich anhand der nachfolgenden Beschreibung eines bevorzugten Ausführungsbeispiels. Es zeigt
- Fig. 1: das Schaltbild einer erfindungsgemäßen Schaltung

Die in Fig. 1 dargestellte Schaltungsanordnung weist einen Drei-Phasen-Gleichrichter G, die erfindungsgemäße Schaltung S und eine Gleichstromlast 1 auf.

Der Drei-Phasen-Gleichrichter G ist auf herkömmliche Art und Weise ausgebildet. Er weist drei Anschlüsse auf, mit denen der Drei-Phasen-Gleichrichter an drei Phasen U₀, V₀, W₀ einer dreiphasigen Stromversorgungseinrichtung angeschlossen ist. Jeder Anschluss ist mit zwei Thyristoren THᵤ₁, THᵤ₂; THᵥ₁, THᵥ₂; TH_{w1}, TH_{w2} verbunden, und zwar jeweils einmal mit der Kathode und einmal mit der Anode des jeweiligen Thyristors THᵤ₁, THᵤ₂; THᵥ₁, THᵥ₂; TH_{w1}, TH_{w2}. Die kathodenseitig an die Phasen U₀, V₀, W₀ angeschlossenen Thyristoren THᵤ₁, THᵥ₁, TH_{w1} bilden eine erste Gruppe von Thyristoren des Gleichrichters und die anodenseitig an die Phasen U₀, V₀, W₀ angeschlossenen Thyristoren THᵤ₂, THᵥ₂, TH_{w2} bilden eine zweite Gruppe von Thyristoren einer gesteuerten Sechspuls-Brückenschaltung (B6C). Die Anoden der Thyristoren THᵤ₁, THᵥ₁, TH_{w1} der ersten Gruppe liegen auf dem positiven Potenzial der Sechspuls-Brückenschaltung. Die Kathoden der Thyristoren THᵤ₂, THᵥ₂, TH_{w2} der zweiten Gruppe liegen auf dem negativen Potenzial der Sechspuls-Brückenschaltung.

Das positive Potenzial und das negative Potenzial der Sechspuls-Brückenschaltung sind über einen Glättungskondensator C_{G} miteinander verbunden.

Zwischen dem positiven Potenzial der Sechspuls-Brückenschaltung und dem auf positiven Potenzial liegenden Anschluss des Ausgangs des Drei-Phasen-Gleichrichters ist eine Drossel L_{G1} und zwischen dem negativen Potenzial der Sechspuls-Brückenschaltung und dem auf dem negativen Potenzial liegenden Anschluss des Ausgang des Drei-Phasen-Gleichrichter ist eine Drossel L_{G2} angeordnet. An den Ausgang ist die Last 1 angeschlossen.

Insoweit ist die Schaltungsanordnung aus dem Stand der Technik bekannt.

Der Nachteil einer solchen Schaltungsanordnung ist, dass aufgrund einer Überspannung im Wechselstromnetz, insbesondere einer transienten Überspannung, über den Drei-Phasen-Gleichrichter G eine Überspannung auf die Last 1 gegeben werden kann. Eine solche Überspannung im Gleichstromnetz kann zu einer Zerstörung der daran angeschlossenen Lasten führen. Dem wird durch die erfindungsgemäße Schaltung S abgeholfen.

Die erfindungsgemäße Schaltung S weist ein Mittel 2 zur Erkennung einer Überspannung auf der Gleichstromseite des Drei-Phasen-Gleichrichters G, d.h. am Ausgang des Drei-Phasen-Gleichrichters G auf. Dieses Mittel 2 zum Erkennen einer Überspannung spricht an, sobald die Spannung zwischen in den beiden Anschlüssen des Ausgangs des Drei-Phasen-Gleichrichters G eine vorbestimmte Schwelle überschreitet.

Hat das Mittel 2 zur Erkennung der Überspannung auf der Gleichstromseite des Drei-Phasen-Gleichrichters G eine Überspannung erkannt, löste dies ein Mittel 2, 3, 4, TH_{1,} L_{S}, Cₛ, D_{U}, D_{V}, D_{W} zum Übernehmen eines Stroms aus, das geeignet und eingerichtet ist, von einem oder mehreren der Strom führenden Thyristoren der ersten Gruppe des Drei-Phasen-Gleichrichters den Strom zu übernehmen, was zum Zwangslöschen des Thyristors bzw. der Thyristoren der ersten Gruppe und somit des Laststroms führt.

Das Mittel 2, 3, 4, TH_{1,} L_{S}, C_{S}, D_{U}, D_{V}, D_{W} zum Übernehmen des Stroms umfasst einen Kondensator Cₛ, der während des laufenden Betriebs des Drei-Phasen-Gleichrichters G von einem Mittel 4 zum Aufladen aufgeladen wird.

Der Kondensator ist in Reihe mit einem ersten Thyristor TH₁ und einer Drossel L_{S} angeordnet.

Der Kondensator ist mit seinem positiven Potenzial dauernd mit dem negativen Potenzial der Sechspuls-Brückenschaltung verbunden. Das negative Potenzial des Kondensators Cₛ ist über die Drossel L_{S} mit einer Kathode eines ersten Thyristors TH₁ des Mittels zum Übernehmen verbunden. Die Anode des ersten Thyristors TH₁ ist jeweils mit der Kathode von Dioden D_{U}, D_{V}, D_{W} verbunden, deren Anoden mit den Anschlüssen U₀, V₀, W₀ des Gleichrichters G verbunden sind.

Im störungsfreien Betrieb ist der erste Thyristor TH₁ gesperrt. Im fehlerfreien Betrieb kann also durch den Stromkreis mit dem Kondensator C_{S}, der Drossel L_{S} und dem ersten Thyristor TH₁ kein Strom getrieben werden. Wird dagegen durch das Mittel 2 zum Erkennen der Überspannung eine solche erkannt, erzeugt dies ein Signal, welches eine Steuerung 3 des Mittels 2, 3, 4, TH_{1,} L_{S}, C_{S}, D_{U}, D_{V}, D_{W} zum Übernehmen des Stroms dazu veranlasst, den Thyristor TH₁ zu zünden. Die Steuerung 3 umfasst dazu einen Zündimpulserzeuger.

Ist der Thyristor TH₁ gezündet, kann sich der Kondensator C_{S} über den dann neu geschlossenen Stromkreis mit dem Kondensator C_{S}, der Drossel L_{S} und dem ersten Thyristor TH₁ entladen. Ein Strom fließt dabei vom positiven Potenzial des Kondensators über zumindest einen der Thyristoren TH_{U2}, TH_{V2}, TH_{W2} der zweiten Gruppe der Sechspuls-Brückenschaltung, eine der Dioden D_{U}, D_{V}, D_{W} zum Thyristor TH₁ und vom Thyristor TH₁ über die Drossel L_{S} zum negativen Pol des Kondensators C_{S}.

Durch diesen neu geschlossenen Stromkreis wird außerdem erreicht, dass der Strom durch zumindest einen der Thyristoren (TH_{U1}, TH_{V1}, TH_{W1}) der ersten Gruppe auf den neu geschlossenen Stromkreis kommutiert. Der neu geschlossene Stromkreis ist so bemessen, dass der Gesamtstrom durch den oder die bislang stromführenden Thyristoren (TH_{U1}, TH_{V1}, TH_{W1}) der ersten Gruppe Null wird. Der Strom aus dem Eingang der Sechspuls-Brückenschaltung vom höchsten Potenzial der Phasen U₀, V₀, W₀ zum niedrigsten Potenzial aus U₀, V₀, W₀ wird ebenfalls über den neu geschlossenen Stromkreis weiter geführt, bis der Kondensator C_{S} entladen ist und ein Umladen des Kondensators C_{S} beginnt, was im weiteren zu einem Zwangslöschen des ersten Thyristors TH₁ führt.

Die erfindungsgemäße Schaltung S weist ferner zwei Thyristoren TH₂₁, TH₂₂ auf, die parallel zu den Drosseln L_{G1}, L_{G2} des Gleichrichters G angeordnet sind. Die zweiten Thyristoren TH₂₁, TH₂₂ sind in Sperrrichtung zum Strom durch die Last angeordnet. Im störungsfreien Betrieb werden die zweiten Thyristoren TH₂₁, TH₂₂ nicht gezündet, so dass ein Stromfluss durch die zweiten Thyristoren TH₂₁, TH₂₂ unterbunden ist.

Im Falle des Auftretens einer Überspannung könnten die Drosseln L_{G1}, L_{G2} bewirken, dass der Strom durch die Last weitergetrieben wird, und so ein Stromfluss durch den Glättungskondensator C_{G} des Gleichrichters die Ausgangsspannung des Gleichrichters erhöht. Um dem vorzubeugen sind die zweiten Thyristoren TH₂₁, TH₂₂ in jeweils einem Freilaufzweig für die Drosseln L_{G1}, L_{G2} angeordnet. Im Falle der Überspannung werden die zweiten Thyristoren TH₂₁, TH₂₂ von der Steuerung 3 gezündet, so dass sich die Drossel L_{G1}, L_{G2} über die zweiten Thyristoren TH₂₁, TH₂₂ entladen können.

Die Steuerung ist so eingerichtet, dass der erste Thyristor TH₁ und die zweiten Thyristoren TH₂₁, TH₂₂ gleichzeitig gezündet werden, sobald eine Überspannung von dem Mittel 2 zum Erkennen der Überspannung erfasst worden ist. Dadurch wird der Laststrom durch das Zwangslöschen der stromführenden Thyristoren der ersten Gruppe unterbrochen. Lediglich der Stromfluss durch die zweiten Thyristoren TH₂₁, TH₂₂ kann zunächst aufrechterhalten werden, solange die Drosseln L_{G1}, L_{G2} einen Stromfluss durch die zweiten Thyristoren treiben.

## Patentansprüche

1. Schaltungsanordnung (G, S) mit einem Gleichrichter und einer Schaltung zum Schutz zumindest eines an die Schaltungsanordnung (G, S) anschließbaren Gleichstromnetzes mit einer oder mehreren Gleichstromlasten (1), wobei das Gleichstromnetz über den Gleichrichter (G) mit elektrischer Energie aus einem Wechselstromnetz versorgbar ist, das Gleichstromnetz mittels der Schaltung (S) gegen Überspannungen aus dem Wechselstromnetz geschützt ist, und
- die Schaltung (S) ein Mittel (2) zur Erkennung einer Überspannung umfasst, mit dem eine Überspannung am Eingang des Gleichstromnetzes erkennbar ist,
- der Gleichrichter zwischen einem Anschluss für ein negatives Potential des Gleichrichters und dem Anschluss für ein negatives Ausgangspotential eine als zweite Drossel bezeichnete Drossel (L_{G2}) aufweist,
- die Schaltung (S) als Mittel (TH_{G2}) zum Entladen der Drossel (L_{G2}) ein zweites steuerbares Schaltelement (TH_{G2}) aufweist, das in einem Zweig parallel zu der Drossel (L_{G2}) angeordnet ist,
**dadurch gekennzeichnet, dass**
- der Gleichrichter aus einem dreiphasigen Wechselstromnetz versorgbar ist,
- der Gleichrichter eine erste Gruppe von Thyristoren (TH_{U1}, TH_{V1}, TH_{W1}) und eine zweite Gruppe von Thyristoren (TH_{U2}, TH_{V2}, TH_{W2}) aufweist, die eine gesteuerte Sechspuls-Brückenschaltung bilden,
- die Schaltung (S) Mittel (3, 4, TH₁, L_{S}, C_{S}, D_{U}, D_{V}, D_{W}) zum Übernehmen des Stroms von einem oder mehreren stromführenden Thyristoren (TH_{U1}, TH_{V1}, TH_{W1}) der ersten Gruppe Thyristoren (TH_{U1}, TH_{V1}, TH_{W1}) des Gleichrichters (G) umfasst, wobei die Übernahme erfolgt sobald das Mittel zur Erkennung der Überspannung eine Überspannung erkannt hat, und wobei die Übernahme des Stroms zu einem Zwangslöschen des Thyristors bzw. der Thyristoren (TH_{U1}, TH_{V1}, TH_{W1}) der ersten Gruppe führt,
- der Gleichrichter zwischen einem Anschluss für ein positives Potential der Sechspuls-Brückenschaltung und dem Anschluss für ein positives Ausgangspotential eine erste Drossel (L_{G1}) aufweist,
- die Schaltung (S) als Mittel (TH_{G1}, TH_{G2}) zum Entladen der ersten Drossel (L_{G1}) des Drei-Phasen-Gleichrichters (G) ein weiteres zweites steuerbares Schaltelement (TH_{G1}) aufweist, das in einem Zweig parallel zu der ersten Drossel (L_{G1}) angeordnet ist,
- wobei das zweite steuerbare Schaltelement (TH_{G1}) und das weitere zweite steuerbare Schaltelement (TH_{G2}), sobald eine Überspannung von dem Mittel (2) zur Erkennung der Überspannung erfasst worden ist, von einer Steuerung (3) des Mittels (3, 4, TH₁, L_{S}, C_{S}, D_{U}, D_{V}, D_{W}) zum Übernehmen des Stroms zum Schließen ansteuerbar sind.

2. Schaltungsanordnung (G, S) nach Anspruch 1, **dadurch gekennzeichnet, dass** das Mittel (3, 4, TH₁, L_{S}, C_{S}, D_{U}, D_{V}, D_{W}) zum Übernehmen des Stroms einen Energiespeicher (C_{S}) als Spannungsquelle aufweist.

3. Schaltungsanordnung (G, S) nach Anspruch 2, **dadurch gekennzeichnet, dass** der Energiespeicher ein Kondensator (C_{S}) ist, der im laufenden Betrieb mit Gleichspannung aufladbar ist.

4. Schaltungsanordnung (G, S) nach Anspruch 2 oder 3, **dadurch gekennzeichnet, dass** die Mittel (3, 4, TH_{1,} L_{S}, C_{S}, D_{U}, D_{V}, D_{W}) zum Übernehmen des Stroms ein erstes steuerbares Schaltelement (TH₁) zum Schalten eines Stromkreises über den Energiespeicher (C_{S}) und einen oder mehrere stromführende Thyristoren (TH_{U2}, TH_{V2}, TH_{W2}) der zweiten Gruppe von Thyristoren (TH_{U2}, TH_{V2}, TH_{W2}) des Gleichrichters aufweist.

5. Schaltungsanordnung (G, S) nach Anspruch 4, **dadurch gekennzeichnet, dass** das erste steuerbare Schaltelement ein erster Thyristor (TH₁) ist.

6. Schaltungsanordnung (G, S) nach Anspruch 2 und nach Anspruch 4 oder 5, **dadurch gekennzeichnet, dass** die Spannungsquelle einen Strom über den vom ersten steuerbaren Schaltelement geschalteten Stromkreis treibt und ein Löschen des Thyristors (TH_{U2}, TH_{V2}, TH_{W2}) oder der Thyristoren (TH_{U2}, TH_{V2}, TH_{W2}) der zweiten Gruppe von Thyristoren (TH_{U2}, TH_{V2}, TH_{W2}) des Gleichrichters verhindert.

7. Schaltungsanordnung (G, S) nach Anspruch 5 oder 6, **dadurch gekennzeichnet, dass** die die Steuerung (3) des Mittels (3, 4, TH_{1,} L_{S}, C_{S}, D_{U}, D_{V}, D_{W}) zum Übernehmen des Stroms geeignet und eingerichtet ist, im Falle einer Überspannung das erste steuerbare Schaltelement (TH₁) zum Schließen anzusteuern.

8. Schaltungsanordnung (G, S) nach Anspruch 7, **dadurch gekennzeichnet, dass** die Steuerung (3) zumindest einen Zündimpulserzeuger umfasst, der geeignet und eingerichtet ist, einen Zündimpuls für den ersten Thyristor (TH₁) zu erzeugen.

9. Schaltungsanordnung (G, S) nach einem der Ansprüche 1 bis 8, **dadurch gekennzeichnet, dass** die zweiten steuerbaren Schaltelemente zweite Thyristoren (TH_{G1}, TH_{G2}) sind, die in Sperrrichtung zum Laststrom angeordnet sind.

10. Schaltungsanordnung (G, S) nach Anspruch 9, **dadurch gekennzeichnet, dass** die zweiten Thyristoren (TH_{G1}, TH_{G2}) vom Zündimpulserzeuger der Steuerung (3) im Falle einer Überspannung einen Zündimpuls erhalten.

11. Schaltungsanordnung (G, S) nach einem der Ansprüche 1 bis 10, **dadurch gekennzeichnet, dass** der Energiespeicher ein Kondensator (C_{S}) ist, der mit dem Anschluss für ein negatives Potential der Sechspuls-Brückenschaltung verbunden ist.

12. Schaltungsanordnung (G, S) nach Anspruch 11, **dadurch gekennzeichnet, dass** der Kondensator (C_{S}) zumindest mittelbar mit der Kathode des ersten Thyristors (TH₁) verbunden ist.

13. Schaltungsanordnung (G, S) nach Anspruch 12, **dadurch gekennzeichnet, dass** der erste Thyristor (TH₁) geeignet und eingerichtet ist mit seiner Anode über je eine Diode (D_{U}, D_{V}, D_{W}) mit einer der drei Phasen verbunden zu sein.

14. Schaltungsanordnung (G, S) nach Anspruch 12 oder 13, **dadurch gekennzeichnet, dass** zwischen dem Kondensator (C_{S}) und dem ersten Thyristor (TH₁) eine Drossel angeordnet ist.

## Claims

1. Circuit arrangement (G, S) with a rectifier and a circuit for protecting at least one DC network with one or more DC loads (1) connectable to the circuit arrangement (G, S), wherein the DC network is supplied with electric power from an AC grid via the rectifier (G), the DC network is protected by means of the circuit (S) from overvoltages from the AC grid, and
- the circuit (S) includes means (2) for detecting overvoltage, by which overvoltage can be detected at the input of the DC network,
- the rectifier has a choke (L_{G2}) referred to as a second choke between a terminal for a negative potential of the rectifier and the terminal for a negative output potential,
- the circuit (S) has a second controllable switch element (TH_{G2}) as means (TH_{G2}) for discharging the choke (L_{G2}) which switch element is arranged in a branch parallel to the choke (L_{G2}),
**characterised in that** the
- the rectifier can be powered by a three-phase AC grid,
- the rectifier has a first group of thyristors (TH_{U1}, TH_{V1}, TH_{W1}) and a second group of thyristors (TH_{U2}, TH_{V2}, TH_{W2}) which form a controlled six pulse bridge circuit,
- the circuit (S) comprises means (3, 4, TH_{1,} Ls, Cs, Du, Dv, Dw) for transferring the current from one or several current-carrying thyristors (TH_{U1}, TH_{V1}, TH_{W1}) of the first group of thyristors (TH_{U1}, TH_{V1}, TH_{W1}) of the rectifier (G), wherein the transfer is performed as soon as the means for detecting overvoltage has detected an overvoltage, and wherein the transfer of the current forces the thyristor or thyristors (TH_{U1}, TH_{V1}, TH_{W1}) of the first group to turn off,
- the rectifier has a first choke (L_{G1}) between a terminal for a positive potential of the six pulse bridge circuit and the terminal for a positive output potential,
- the circuit (S) has an additional second controllable switch element (TH_{G1}) as means (TH_{G1}, TH_{G2}) for discharging the first choke (L_{G1}) of the three-phase rectifier (G), which switch element is arranged in a branch parallel to the first choke (L_{G1}),
- wherein the second controllable switch element (TH_{G1}) and the further second controllable switch element (TH_{G2}), as soon as an overvoltage has been detected by the means (2) for detecting overvoltage, are controlled to close by a controller (3) of the means (3, 4, TH₁, Ls, Cs, Du, Dv, Dw) for transferring the current.

2. Circuit arrangement (G, S) according to claim 1, **characterised in that** the means (3, 4, TH_{1,} Ls, Cs, Du, Dv, Dw) for transferring the current has an energy store (Cs) as a voltage source.

3. Circuit arrangement (G, S) according to claim 2, **characterised in that** the energy store is a capacitor (Cs) which can be charged with DC voltage during operation.

4. Circuit arrangement (G, S) according to claim 2 or 3, **characterised in that** the means (3, 4, TH_{1,} Ls, Cs, Du, Dv, Dw) for transferring the current has a first controllable switching element (TH₁) for switching an electric circuit via the energy store (Cs) and one or more current-carrying thyristors (TH_{U2}, TH_{V2}, TH_{W2}) of the second group of thyristors (TH_{U2}, TH_{V2}, TH_{W2}) of the rectifier.

5. Circuit arrangement (G, S) according to claim 4, **characterised in that** the first controllable switching element is a first thyristor (TH₁).

6. Circuit arrangement (G, S) according to claim 2 and according to claim 4 or 5, **characterised in that** the voltage source drives a current via the circuit that is switched by the first controllable switching element and prevents the thyristor (TH_{U2}, TH_{V2}, TH_{W2}) or the thyristors (TH_{U2}, TH_{V2}, TH_{W2}) of a second group of thyristors (TH_{U2}, TH_{V2}, TH_{W2}) of the rectifier from turning off.

7. Circuit arrangement (G, S) according to claim 5 or 6, **characterised in that** the controller (3) of the means (3, 4, TH_{1,} Ls, Cs, Du, Dv, Dw) for transferring the current is suitable and configured to control the first controllable switching element (TH₁) to close in the event of an overvoltage.

8. Circuit arrangement (G, S) according to claim 7, **characterised in that** the controller (3) comprises at least one trigger pulse generator which is suitable and configured to generate a trigger pulse for the first thyristor (TH₁).

9. Circuit arrangement (G, S) according to any of claims 1 to 8, **characterised in that** the second controllable switching elements are second thyristors (TH_{G1}, TH_{G2}) which are arranged in blocking direction to the load current.

10. Circuit arrangement (G, S) according to claim 9, **characterised in that** the second thyristors (TH_{G1}, TH_{G2}) receive a trigger pulse from the trigger pulse generator of the controller (3) in case of overvoltage.

11. Circuit arrangement (G, S) according to any of claims 1 to 10, **characterised in that** the energy store is a capacitor (Cs) which is connected to the terminal for a negative potential of the six pulse bridge circuit.

12. Circuit arrangement (G, S) according to claim 11, **characterised in that** the capacitor (Cs) is connected at least indirectly to the cathode of the first thyristor (TH₁).

13. Circuit arrangement (G, S) according to claim 12, **characterised in that** the first thyristor (TH₁) is suitable and is configured so that its anode can be connected to one of the three phases via a corresponding diode (Du, Dv, Dw).

14. Circuit arrangement (G, S) according to claim 12 or 13, **characterised in that** a restrictor is arranged between the capacitor (Cs) and the first thyristor (TH₁).

## Revendications

1. Configuration de circuits (G, S) comportant un redresseur et un circuit pour la protection d'au moins un réseau à courant continu raccordable à la configuration de circuits (G, S) comportant une ou plusieurs charges de courant continu (1), dans lequel le réseau à courant continu peut être alimenté en énergie électrique issue d'un réseau à courant alternatif via le redresseur (G), le réseau à courant continu est protégé contre les surtensions issues du réseau à courant alternatif au moyen du circuit (S), et
- le circuit (S) comprend un moyen (2) pour la reconnaissance d'une surtension, avec lequel une surtension au niveau de l'entrée du réseau à courant continu est reconnaissable,
- le redresseur entre une borne pour un potentiel négatif du redresseur et la borne pour un potentiel de sortie négatif présente une inductance (L_{G2}) désignée seconde inductance,
- le circuit (S) présente en tant que moyen (TH_{G2}) pour le déchargement de l'inductance (L_{G2}) un second élément de commutation pouvant être commandé (TH_{G2}) qui est disposé dans une branche parallèlement à l'inductance (L_{G2}),
**caractérisée en ce que**
- le redresseur peut être alimenté à partir d'un réseau à courant alternatif triphasé,
- le redresseur présente un premier groupe de thyristors (TH_{U1}, TH_{V1}, TH_{W1}) et un second groupe de thyristors (TH_{U2}, TH_{V2}, TH_{W2}) qui forment un circuit en pont à six impulsions commandé,
- le circuit (S) comprend des moyens (3, 4, TH_{1,} Lₛ, Cₛ, Dᵤ, Dᵥ, D_{w}) pour la prise en charge du courant par un ou plusieurs thyristors conducteurs de courant (TH_{U1}, TH_{V1}, TH_{W1}) du premier groupe de thyristors (TH_{U1}, TH_{V1}, TH_{W1}) du redresseur (G), dans lequel la prise en charge s'effectue dès que le moyen pour la reconnaissance de la surtension a reconnu une surtension, et dans lequel la surtension du courant conduit à une extinction forcée du thyristor plus particulièrement des thyristors (TH_{U1}, TH_{V1}, TH_{W1}) du premier groupe,
- le redresseur entre une borne pour un potentiel positif du circuit en pont à six impulsions et la borne pour un potentiel de sortie positif présente une première inductance (L_{G1}),
- le circuit (S) présente en tant que moyens (TH_{G1}, TH_{G2}) pour le déchargement de la première inductance (L_{G1}) du redresseur triphasé (G) un second élément de commutation pouvant être commandé supplémentaire (TH_{G1}) qui est disposé dans une branche parallèlement à la première inductance (L_{G1}),
- dans laquelle le second élément de commutation pouvant être commandé (TH_{G1}) et le second élément de commutation pouvant être commandé supplémentaire (TH_{G2}), dès qu'une surtension est détectée par le moyen (2) pour la reconnaissance de la surtension, peuvent être commandés pour une fermeture par une commande (3) du moyen (3, 4, TH₁, Lₛ, Cₛ, Dᵤ, Dᵥ, D_{w}) pour la prise en charge du courant.

2. Configuration de circuits (G, S) selon la revendication 1, **caractérisée en ce que** le moyen (3, 4, TH_{1,} Lₛ, Cₛ, Dᵤ, Dᵥ, D_{w}) présente un accumulateur d'énergie (Cₛ) en tant que source de tension.

3. Configuration de circuits (G, S) selon la revendication 2, **caractérisée en ce que** l'accumulateur d'énergie est un condensateur (Cₛ) qui est chargeable en tension continue pendant le fonctionnement.

4. Configuration de circuits (G, S) selon la revendication 2 ou 3, **caractérisée en ce que** les moyens (3, 4, TH_{1,} Lₛ, Cₛ, Dᵤ, Dᵥ, D_{w}) pour la prise en charge du courant présentent un premier élément de commutation pouvant être commandé (TH₁) pour la commutation d'un circuit électrique via l'accumulateur d'énergie (Cₛ) et un ou plusieurs thyristors conducteurs de courant (TH_{U2}, TH_{V2}, TH_{W2}) du second groupe de thyristors (TH_{U2}, TH_{V2}, TH_{W2}) du redresseur.

5. Configuration de circuits (G, S) selon la revendication 4, **caractérisée en ce que** le premier élément de commutation pouvant être commandé est un premier thyristor (TH₁).

6. Configuration de circuits (G, S) selon la revendication 2 et selon la revendication 4 ou 5, **caractérisée en ce que** la source de tension entraîne un courant via le circuit électrique commuté par le premier élément de commutation pouvant être commandé et empêche une extinction du thyristor (TH_{U2}, TH_{V2}, TH_{W2}) ou des thyristors (TH_{U2}, TH_{V2}, TH_{W2}) du second groupe par des thyristors (TH_{U2}, TH_{V2}, TH_{V2}) du redresseur.

7. Configuration de circuits (G, S) selon la revendication 5 ou 6, **caractérisée en ce que** la commande (3) du moyen (3, 4, TH_{1,} Lₛ, Cₛ, Dᵤ, Dᵥ, D_{w}) pour la prise en charge du courant est adéquate et conçue, en cas de surtension, pour commander la fermeture du premier élément de commutation pouvant être commandé (TH₁).

8. Configuration de circuits (G, S) selon la revendication 7, **caractérisée en ce que** la commande (3) comprend au moins un générateur d'impulsions d'allumage qui est adéquat et conçu pour générer une impulsion d'allumage pour le premier thyristor (TH₁).

9. Configuration de circuits (G, S) selon l'une des revendications 1 à 8, **caractérisée en ce que** les seconds éléments de commutation pouvant être commandés sont des seconds thyristors (TH_{G1}, TH_{G2}) qui sont disposés dans une direction de blocage par rapport au courant de charge.

10. Configuration de circuits (G, S) selon la revendication 9, **caractérisée en ce que** les seconds thyristors (TH_{G1}, TH_{G2}) reçoivent une impulsion d'allumage par le générateur d'impulsions d'allumage de la commande (3) en cas de surtension.

11. Configuration de circuits (G, S) selon l'une des revendications 1 à 10, **caractérisée en ce que** l'accumulateur d'énergie est un condensateur (Cₛ) qui est relié à la borne pour un potentiel négatif du circuit en pont à six impulsions.

12. Configuration de circuits (G, S) selon la revendication 11, **caractérisée en ce que** le condensateur (Cₛ) est relié au moins indirectement à la cathode du premier thyristor (TH₁).

13. Configuration de circuits (G, S) selon la revendication 12, **caractérisée en ce que** le premier thyristor (TH₁) est adéquat et conçu pour être relié à son anode via une diode (Dᵤ, Dᵥ, D_{w}) avec l'une des trois phases.

14. Configuration de circuits (G, S) selon la revendication 12 ou 13, **caractérisée en ce que**, entre le condensateur (Cₛ) et le premier thyristor (TH₁) est disposée une inductance.
